# EUROPÄISCHE PATENTSCHRIFT

(11) **EP 2 293 866 B1**
(45) Veröffentlichungstag und Bekanntmachung des Hinweises auf die Patenterteilung: **02.01.2013**
(21) Anmeldenummer: 09737526.5
(22) Anmeldetag: 30.04.2009
(51) Int. Cl.: B01F 3/04, F16K 15/14, C02F 3/20

(54) **VORRICHTUNG ZUM EINTRAGEN VON GASBLÄSCHEN IN EINE FLÜSSIGKEIT**
DEVICE FOR INSERTING GAS BUBBLES INTO A LIQUID
DISPOSITIF POUR INTRODUIRE DES BULLES DE GAZ DANS UN LIQUIDE

(30) Priorität: 02.05.2008 AT 6942008
(43) Veröffentlichungstag der Anmeldung: 16.03.2011
(73) Patentinhaber: Aquaconsult Anlagenbau GmbH, 2500 Baden (AT)
(72) Erfinder: DOPPLER, Roland, A-2500 Baden (AT)
(74) Vertreter: Sonn & Partner Patentanwälte
(86) Internationale Anmeldenummer: PCT/AT2009/000180
(87) Internationale Veröffentlichungsnummer: WO 2009/132374

(56) Entgegenhaltungen:
- EP-A1- 0 229 386
- EP-A1- 0 549 518
- EP-A1- 0 919 524
- WO-A1-2004/014532
- WO-A1-2005/115929
- AT-B- 412 760
- DE-A1- 3 809 016
- DE-A1- 3 921 937
- DE-A1- 10 251 494
- DE-U1- 9 013 213
- DE-U1- 9 412 161
- DE-U1- 20 007 347
- GB-A- 1 304 147
- GB-A- 2 319 189
- JP-A- 3 165 897
- LU-A1- 40 629
- US-A- 4 870 992
- US-A- 5 863 031
- US-A1- 2004 144 435
- US-A1- 2007 013 089

## Beschreibung

Die Erfindung betrifft eine Belüfter-Vorrichtung zum Eintragen von Gasbläschen in eine Flüssigkeit gemäß dem Oberbegriff von Anspruch 1.

Bei der biologischen Reinigung von Abwässern unter Anwendung des aeroben Verfahrens in Klärbecken werden Vorrichtungen zum Eintragen von Gasbläschen eingesetzt, die an der Sohle des Beckens positioniert sind. Diese Vorrichtungen werden auch als "Belüfter" bezeichnet. Sie weisen zumeist einen plattenförmigen Grundkörper mit einer daran angebrachten gelochten, geschlitzten oder andersartig gasdurchlässigen Platte, Folie oder Membran, allgemein einem dehnbaren oder aber starren Gasblasen-Abgabelement auf. Zwischen Grundkörper und Gasblasen-Abgabelement ist im Fall einer perforierten Membran ein stark erweiterbarer Zwischenraum vorgesehen, dem Gas, vorzugsweise Luft, zugeführt wird, das bzw. die feinblasig unter entsprechendem Druck über die Perforationen an das zu reinigende Abwasser abgegeben wird.

Ein solcher plattenförmiger Belüfter ist z.B. aus der DE 94 12 161 U1 bekannt, bei dem ein Stützkörper, an dem eine elastische Membran klemmend befestigt ist, eine zentrale Luftzuführung aufweist, die mit einer Rückschlagklappe aus elastischem Material versehen ist, um bei Stillstand des Gasflusses ein Eindringen der Flüssigkeit in die Luftzuführung zu verhindern.

Aus der EP 0 549 518 A1 ist ein Belüfter mit an einer in Draufsicht runden Grundplatte und einer daran befestigten Belüftermembran bekannt, wobei mittige Gaszutrittsöffnungen und ein darüber angeordneter, mit Gasaustrittsöffnungen versehener Membrantragkörper vorgesehen sind. Der Membrantragkörper ist in seinem Umfang nur unwesentlich größer als der Gaszufuhrstutzen der Grundplatte und weist eine gummielastische Ventilmembran auf, deren Randbereich flexibel ist und wie ein Rückschlagventil wirkt, so dass die Gasaustrittsöffnungen freigelegt und verschlossen werden können.

Aus der DE 90 13 213 U1 ist ein Flächenbegaser mit einem Trägerelement, an welchem mittels eines Spannrings eine Begasungs-Membran befestigt ist. Das Trägerelement weist eine zentrale Gaszufuhröffnung auf, durch die Druckluft in den Zwischenraum zwischen Trägerelement und Membran eingeblasen wird. Die Druckluft tritt durch eine Vielzahl von Gasdurchtrittsöffnungen aus strömt in das zu begasende Abwasser. In der Gaszufuhröffnung ist ein starrer Ventilteller angeordnet, der durch eine Feder mittels einer Stange gehalten und in Schließstellung vorgespannt wird. Die Druckluft hebt den Ventilteller gegen die Kraft der Feder an, so dass Luft einströmen kann. Nach Abschalten der Druckluftquelle senkt sich der Ventilteller wieder auf seine am Ventilsitz anliegende Schließstellung ab, um ein Eindringen von Abwasser zu verhindern. Am Ventilteller ist zudem eine Scheibe mittels eines Stifts derart befestigt, dass die Membran den Ventilteller in der Schließstellung vorbelastet.

In der EP 0 919 524 A1 die eine Belüffer-Vorrichtung entsprechend dem oberbegriff des Anspruch 1 offenbart, ist eine Schutzeinrichtung für einen Membranbelüfter beschrieben, der an eine mit einer Druckluftquelle verbundene Luftversorgungsleitung angeschlossen ist. In der Luftversorgungsleitung ist zwischen dem Membranbelüfter und der Druckluftquelle ein Rückschlagventil angeordnet, welches beim Ausfall der Druckluftversorgung selbsttätig schließt. Das Rückschlagventil weist als Ventilkörper eine elastisch nachgiebige Ventilmembran auf. In der Ruhe- oder Schließstellung des Rückschlagventils liegt der Randbereich der Ventilmembran an einem ringförmig umlaufenden Ventilsitz an.

Die DE 102 51 494 A1 beschreibt einen Plattenbelüfter mit einem Luftzufuhrrohr in einer Luftverteilungskammer unterhalb einer Grundplatte, welche eine Luftverteilungsmembrane trägt. Die Grundplatte weist im Bereich der Luftverteilungskammer mehrere Luftzufuhröffnungen auf. Zwischen den Luftzufuhröffnungen und der Luftverteilungsmembrane ist eine Ventilklappe angeordnet, auf der die Luftverteilungsmembrane aufliegt, wenn die Luftzufuhr unterbrochen ist. Die Ventilklappe ist als elastische Folie ausgebildet, welche sämtliche Luftzufuhröffnungen abdeckt. Die durch das Luftzufuhrrohr in den Plattenbelüfter strömende Luft gelangt über die Luftzufuhröffnungen unter die Ventilklappe welche sich unter dem Luftdruck von den Luftzufuhröffnungen nach oben abhebt, so dass die Luft anschließend in den Raum zwischen der Luftverteilungsmembrane und der Grundplatte einströmt.

In der JP 03 165 897 A ist ein Belüfter mit einem in einer Luftzufuhr angeordneten Absperrventil beschrieben. Das Absperrventil weist Ventilplatten auf, welche an einer Ventilstange angebracht sind, die durch die Luftzufuhröffnung durchragt.

Die GB 2 319 189 A beschreibt einen Belüfter mit einer eine hohe Oberflächenenergie aufweisenden Schicht und einer gasdurchlässigen, eine niedrige Oberflächenenergie aufweisenden Schicht, die vom Belüfter beabstandet angeordnet ist. Diese Ausführung soll vergleichsweise kleine Luftbläschen erzeugen. Ferner kann in einer Gaszufuhr ein Absperrventil angeordnet sein.

Ein tellerartiger Belüfter mit daran angebrachter Weichgummiplatte zur Luftabgabe ist aus der DE 36 00 234 A1 bekannt. Hier weist die Weichgummiplatte Schlitze zum Luftdurchtritt auf, die elastisch aufgrund des Luftdrucks öffen- und schließbar sind.

Ein plattenförmiger Belüfter zum feinblasigen Belüften von Wasser ist z.B. aus der EP 0 028 728 A1 bekannt. An einer dichten Grundplatte mit einer an eine Luftzufuhrleitung angeschlossenen Luftzufuhröffnung ist eine obere gelochte Luftverteilerfolie mittels Klemmprofilen fixiert und mittels Stegen gestützt. Die Luftverteilerfolie ist lokal an der Stelle direkt gegenüber der Luftzufuhröffnung durch ein Abdichtrondell abgedichtet, so dass sich bei Abschalten der Luftzufuhr, wenn sich die obere Luftverteilerfolie auf die Grundplatte legt, das Abdichtrondell auf die Luftzufuhrsöffnung anlegt. Dadurch wird eine Art Ventil gebildet, das den Eintritt von Wasser und darin enthaltenen Schmutzteilchen über die Luftzufuhröffnung in die Luftzufuhrleitung vermeiden. Der Nachteil dieses Belüfters ist, dass der Gasanschluss bzw. die Gaszufuhröffnung an sich frei liegt und daher vor gegebenenfalls rückfließendem Abwasser ungeschützt ist. Bei einem Schadensfall ist somit die Gaszufuhreinrichtung nicht gegen rückfließendes Abwasser geschützt. Bei einem Riss der Luftverteilerfolie legt sich diese samt dem Abdichtrondell zwar an der Oberfläche der Grundplatte und der darin ausgebildeten Luftzufuhröffnung an, sie kann sich jedoch leicht davon lösen und wegbewegen, falls das Abdichtrondell durch die materialbedingte bleibende Verdehnung der Luftverteilerfolie überhaupt genau an der Luftzufuhröffnung zu liegen kommt und diese vollständig abdeckt. Im Abwasser suspendierte Teilchen setzen sich sodann in der Gaszufuhröffnung an und verlegen oder verkleben diese. Ein solcher Vorfall kann auch größere Schäden mit sich ziehen, die nicht nur aufwendige Reparaturarbeiten am gesamten Belüfter und damit verbundene Kosten sowie Stillstand des Betriebs, sondern in extremen Fällen auch den Ersatz des Belüfters durch einen neuen zur Folge haben.

Aus der DE 33 16 140 A1 ist ein Flächenbelüfter zum feinblasigen Begasen von Flüssigkeiten bekannt, bei dem u.a. ein Gasverteilerelement aus festem, porösem Material mit einem flexiblen Basiselement verbunden ist. Um die Luftzufuhröffnung bei Unterbrechung der Luftzufuhr gegenüber der Flüssigkeit abzudichten, weist das starre Gasverteiler- bzw. Gasbläschen-Abgabeelement unterseitig ein der Luftzufuhröffnung gegenüberliegendes elastisches Dichtungselement auf, das im drucklosen Zustand am Rand der Luftzufuhröffnung anliegt. Da sich das Gasverteilerelement dieses Flächenbelüfters aufgrund seines starren Materials beim Einblasen von Luft in den Zwischenraum zwischen dem Gasverteilerelement und dem Basiskörper naturgemäß nicht aufwölben und sich damit die Oberfläche des Gasverteilerelements nicht vergrößern kann, ist eine Luft- und Druckverteilung im Zwischenraum nur bei Aufwölben des Basiselements möglich, bei dem allerdings Beschränkungen gegeben sind, und als auch eine Luftabgabe an das Abwasser und damit das Reinigen des Abwassers ist nur reduziert möglich. Aufgrund des starren Materials des Gasverteilerelements sind ferner Wartungs- und Reparaturarbeiten oder gar ein Wechsel des Gasverteilerelements relativ schwierig durchzuführen.

Es ist nun Aufgabe der Erfindung, eine Belüftungsvorrichtung der eingangs genannten Art zu schaffen, die eine zuverlässige und effiziente Gaszufuhr, Gasverteilung sowie Gaseintragung in das Abwasser gewährleistet. Weiters soll der Belüfter und gleichzeitig einfach aufgebaut und kostengünstig ist, so dass Reparatur- und Wartungsarbeiten ohne großen Aufwand vorgenommen werden können, wobei die Gaszufuhrmittel leicht zugänglich und leicht austauschbar sind.

Diese Aufgabe wird erfindungsgemäß durch einer Belüffer-Vorrichtung wie in Anspruch 1 definiert gelöst. Vorteilhafte Ausführungsformen und Weiterbildungen sind in den abhängigen Ansprüchen angegeben.

Durch die Befestigung eines Ventilelements direkt an der in der Betriebsposition oberen Seite der Grundplatte ist nicht nur der Austritt von Gas aus der Gaszufuhröffnung kontinuierlich, ohne Beeinträchtigung gegeben, sondern es kann gleichzeitig auch die Druckverteilung des Gases, wie Luft, optimiert werden. Dabei stellt das Ventilelement im Prinzip eine Art Rückschlagventil aus elastischem Material mit zumindest einem Einschnitt bzw. Schlitz dar, und mit Hilfe dieses Rückschlagventils kann die Gaszufuhröffnung bei Unterbrechung der Gaszufuhr, aus welchen Gründen auch immer, sicher verschlossen werden. Selbst bei einem Riss einer als Gasverteiler bevorzugt verwendeten perforierten Membran oder bei anderen vergleichbaren Störungen am Belüfter kann die Gaszufuhröffnung vor rückfließendem Abwasser und darin suspendierten Partikeln geschützt werden, da das Ventilelement direkt am Grundkörper angebracht ist. Zusätzlich kann das aus den Gaszufuhröffnung strömende Gas mit Hilfe eines solchen Ventilelements an der Grundplatte optimal druckgeregelt werden. Ein derartiges Ventilelement ist außerdem einfach herzustellen und anzubringen, und es läßt allfällige Behebungen von Störungen leicht zu.

Je nach Anwendung und Zielvorstellung kann das Ventilelement verschiedene Schlitzformen aufweisen, wobei eine Bogenform aus strömungstechnischen Gründen dann vorteilhaft ist, wenn große Durchflussmengen gewünscht sind, wobei dies insbesondere dann gegeben ist, wenn das Ventilelement in Entsprechung einer Kreisform der Gaszufuhröffnung in Kreisform bzw. in im Wesentlichen runder Form vorliegt. Dabei ist auch von Vorteil, wenn die Gaszufuhröffnung mit dem daran direkt angebrachten Ventilelement bei Verwendung einer länglichen Grundplatte nahe deren kürzerer Seite bzw. Stirnseite angeordnet ist und die konkave Seite des bogenförmigen Schlitzes zur gegenüberliegenden Stirnseite der Grundplatte gerichtet ist. Auf diese Weise kann das Ventilelement bei Gaszufuhr derart klappenartig geöffnet werden, dass sich eine optimale und gleichmäßige Druck- und damit Gasverteilung über die gesamte Länge des Belüfters einstellen läßt und über die gesamte Fläche der elastisch verformbaren, perforierten Membran in einfacher Art ein gleicher Gasdruck erreicht werden kann, wodurch das Gas in homogener Verteilung an das Abwasser abgegeben werden kann.

Durch die Wahl der Schlitzform im Ventilelement kann eine Kennlinie für den Druckverlust mit einem Exponenten von bis zu unter eins erreicht werden, was vorteilhafte Auswirkungen auf den Regelbereich der Gasverteilung hat. Das geschlitzte Ventilelement aus elastischem Material ist darüberhinaus bei Einstellung bzw. Unterbrechung der Gaszufuhr vorteilhaft. In diesem Fall entweicht das restliche Gas allmählich über die perforierte Membran aus dem Belüfter, bevor das Ventilelement vollständig geschlossen ist. Durch den sinkenden Gasdruck kann sich die Membran sukzessive entspannen, und ein übermäßiger Druckanstieg von außen (Abwasser) an der Membran kann verhindert werden. Dieser Entlastungseffekt der Membran bewirkt weiters, dass sich die Perforationen der Membran verengen und dadurch die Schmutzpartikel aus den Perforationen herausgequetscht werden.

Fertigungstechnisch ist es günstig, wenn das elastische Material des Ventilelements jenem der Membran entspricht.

Im Prinzip kann das Ventilelement auch in herkömmlichen Belüftereinrichtungen eingesetzt bzw. nachgerüstet werden. Für das optimale Ausnutzen der Effekte und Vorteile des Ventilelements ist es günstig, das Ventilelement an einem Belüfter zu verwenden, der eine feste, in Draufsicht im Wesentlichen rechteckige Grundplatte als Basiskörper und eine daran oberseitig angebrachte elastische, perforierte Membran aufweist.

Eine einfach gestaltete und leicht "handhabbare" Belüftervorrichtung liegt vor, wenn die Vorrichtung in modularer Bauweise bereitgestellt ist. Damit kann sie ohne viel Arbeits- und Kostenaufwand hergestellt, transportiert und montiert werden. Die einzelnen Konstruktionsteile sind so weit wie möglich lösbar miteinander verbunden, so dass sie auch leicht separiert werden können. Dadurch können die einzelnen Belüfterteile, wie Ventilelement, Membran, Grundplatte, Abschlussteilen, Gaszufuhreinrichtung etc., leicht zugänglich gemacht und Reparatur-, Austausch-, Reinigungs- oder Wartungsarbeiten an den Einzelteilen des Belüfters ohne großen Arbeits- und Kostenaufwand vorgenommen werden.

Die jeweiligen Verbindungen der einzelnen Konstruktionsteile können in Form von in Kraft- und/oder Formschluss aber auch in Form von Stoffschlussverbindungen gewählt sein.

Beispielsweise wird die Membran bevorzugt an den Längsseiten und Stirnseiten der Grundplatte lösbar fixiert. Die Membran kann an den Längsseiten der Grundplatte in Nuten und mit einem entsprechend geformten Verriegelungskörper klemmend befestigt sein. Eine derartige Befestigungsart kann auch an den Stirnseiten der Grundplatte gegeben sein. Bevorzugt ist dort die Membran aber mittels ebenfalls lösbar an der Grundplatte angebrachten Abschlussteilen gehalten.

Die lösbare Verbindung der Abschlussteile mit der Grundplatte kann eine einfache Steckverbindung sein, und die Abschlussteile können zur Fixierung der Membran an den Stirnseiten der Grundplatte eine Klemmnut aufweisen, in der die Grundplatte mit der Membran passend sitzt. Dabei kann die Membran um die Stirnseiten der Grundplatte "umgeschlagen" und durch den Passsitz in der Klemmnut der Abschlussteile klemmend gehalten sein.

Zusätzlich zu den Form- und Kraftschlussverbindungen können die Konstruktionsteile auch, falls aus Sicherheitsgründen gewünscht, miteinander verklebt werden. In manchen Fällen ist dies besonders bei der Verbindung der Membran mit der Grundplatte gewünscht, da die elastische Membran bei höheren Gasdrücken an den Verbindungen mit der Grundplatte, d.h. an ihren Rändern, stark auf Zug beansprucht wird. Um einem Herausziehen der Membran und entsprechendem Ausfall des Belüfters vorzubeugen und die Verbindungsstellen zu verstärken, können einfache Klebestreifen, z.B. in Form von starken Doppelklebebändern, vorgesehen werden oder ein adäquater Kleber - wulstförmig - an den gewünschten Stellen aufgetragen werden. Hinsichtlich letzterer Variante haben sich Polyurethan-Kleber gut bewährt, dies vor allem in Verbindung mit einem Polykondensat oder einem Polyadditionsprodukt, wie z.B. Polyurethan, EPDM, Silikon, Viton, Polyethylen-Trifluorid oder Polycarbonat, als Membran-Material. Diese Materialpaarung eignet sich auch in gleicher Weise gut für die Klebebefestigung des Ventilelements an der Grundplatte. Es hat sich gezeigt, dass eine solche Klebeverbindung auch eine einfach und rasch durchführbare Montage der Belüftervorrichtung, insbesondere Anbringung des Ventilelements und der Membran, ermöglicht.

Das Ventilelement kann an sich nichtsdestoweniger gleichfalls lösbar an der Grundplatte angebracht sein, wobei beispielsweise ein lösbarer Kleber oder Klebestreifen im Befestigungsbereich am Rand der Gaszufuhröffnung bzw. des Ventilelements vorgesehen sein kann.

Auch die Abschlussteile können mit der Grundplatte in zusätzlicher Klebeverbindung stehen, wobei hierfür ein Polyurethan-Kleber günstig ist, der in entsprechenden Bohrungen in den Abschlussteilen eingebracht wird. Fertigungstechnisch und hinsichtlich der Verklebung der Abschlussteile mit der Grundplatte ist es günstig, die Abschlussteile als Kunststoff-Spritzgussteile vorzusehen.

Als Gaszufuhreinrichtung kann an sich eine gängige Gaszufuhreinrichtung verwendet werden, die dem Zwischenraum zwischen der Grundplatte und der perforierten Membran Gas unter entsprechendem Druck zuführen kann. Auch hier ist es für das Arbeiten am Belüfter bzw. an Teilen davon von Vorteil, wenn die Gaszufuhreinrichtung lösbar mit der Grundplatte verbunden ist.

Die Erfindung wird nachstehend anhand von in der Zeichnung veranschaulichten Ausführungsbeispielen noch weiter erläutert. Es zeigen
- Fig. 1: eine Draufsicht auf eine Belüftervorrichtung gemäß der Erfindung mit einem Ventilelement bei abgenommener Membran;
- Fig. 2: eine Schnittansicht einer solchen Belüftervorrichtung mit Belüfter-Grundplatte und daran befestigter Membran, in der Betriebsposition;
- Fig. 3: eine Stirnseitenansicht einer solchen Belüftervorrichtung mit Gaszufuhreinrichtung;
- Fig. 4: eine Explosionsdarstellung der Belüftervorrichtung gemäß Fig. 1;
- Fig. 5: eine Detailansicht der Fig. 1 zur Veranschaulichung der Gaszufuhröffnung mit dem Ventilelement;
- Fig. 6: einen Längsschnitt der Belüftervorrichtung gemäß der Linie VI-VI in Fig. 1;
- Fig. 7: ein vergrößerter Längsschnitt dieser Belüftervorrichtung, in Betriebsposition zur Veranschaulichung der Funktion des Ventilelements;
- die Fig. 8a bis 8e: verschiedene Ausführungsbeispiele des Ventilelements in Draufsicht;
- Fig. 9: eine Schnittansicht eines zu Fig. 7 alternativen Ventilelements an einer Gaszufuhröffnung in der Offenstellung;
- Fig. 10: eine schaubildliche Ansicht eines Abschlussteils der erfindungsgemäßen Belüftervorrichtung;
- Fig. 11: eine schematische Seiten- bzw. Schnittansicht diese Abschlussteils gemäß Fig. 10;
- Fig. 12: eine Detail-Schnittansicht dieses Abschlussteils mit darin aufgenommener Grundplatte und Membran gemäß der Linie XII-XII in Fig. 10; und
- Fig. 13: eine schaubildliche Ansicht einer Gaszufuhreinrichtung mit Gaszufuhrkanal und Grundplatten-Anschlussteil in einer Belüftervorrichtung mit Ventilelement.

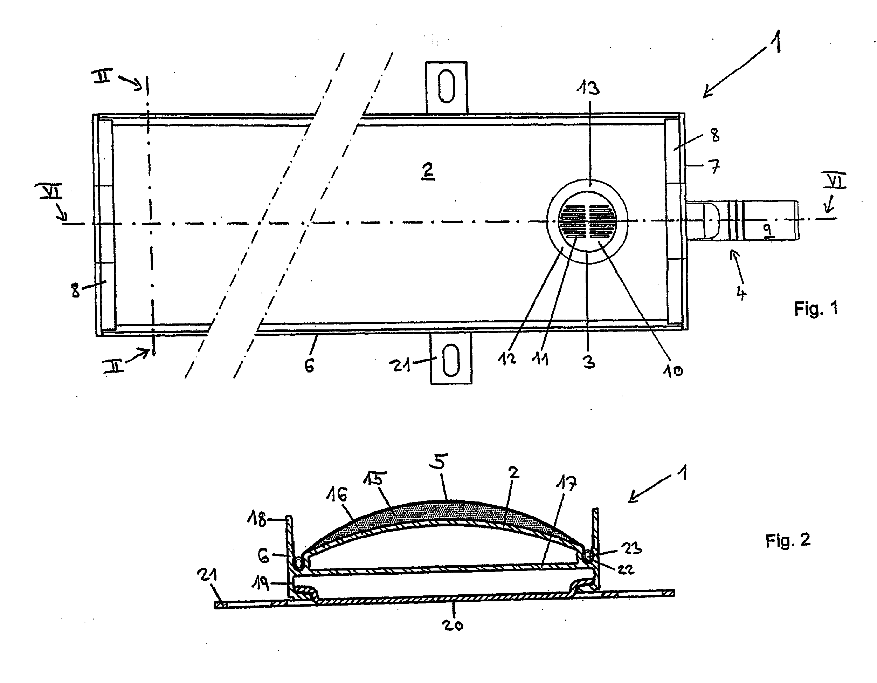

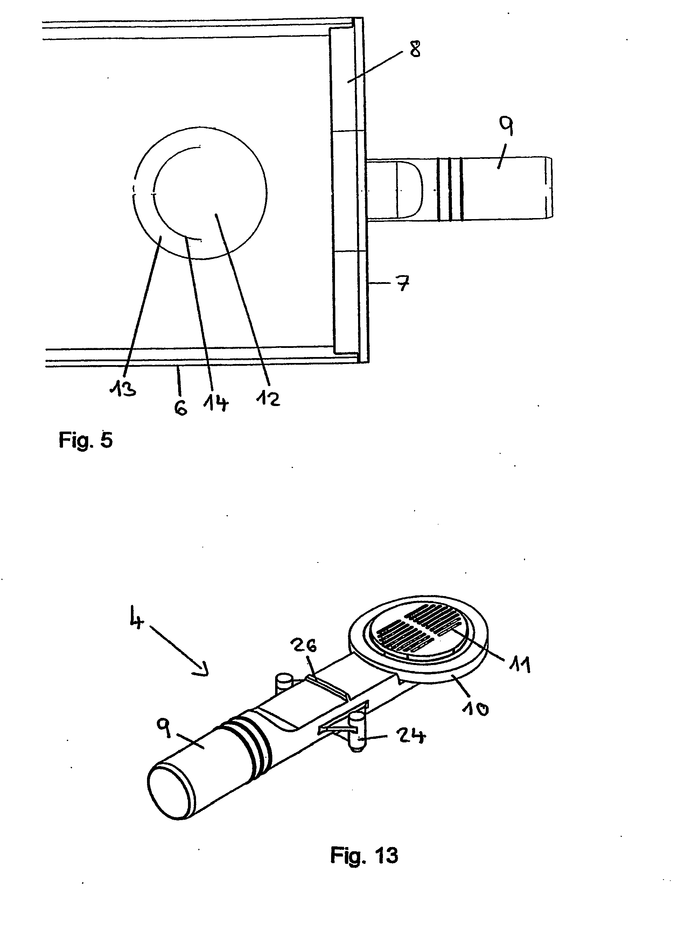

In den Fig. 1 bis 6 ist schematisch eine Belüfter-Vorrichtung 1 zum Eintragen von Gasbläschen in eine Flüssigkeit in verschiedenen Darstellungen veranschaulicht. Die Vorrichtung 1 weist eine starre Grundplatte 2 aus Kunststoff und eine darin ausgebildete Gaszufuhröffnung 3 auf, die mit einer Gaszufuhreinrichtung 4 (vgl. auch Fig. 13) verbunden und direkt an der Gaszufuhröffnung 3 ventilartig verschließbar ist, wie nachstehend noch näher erläutert werden wird.

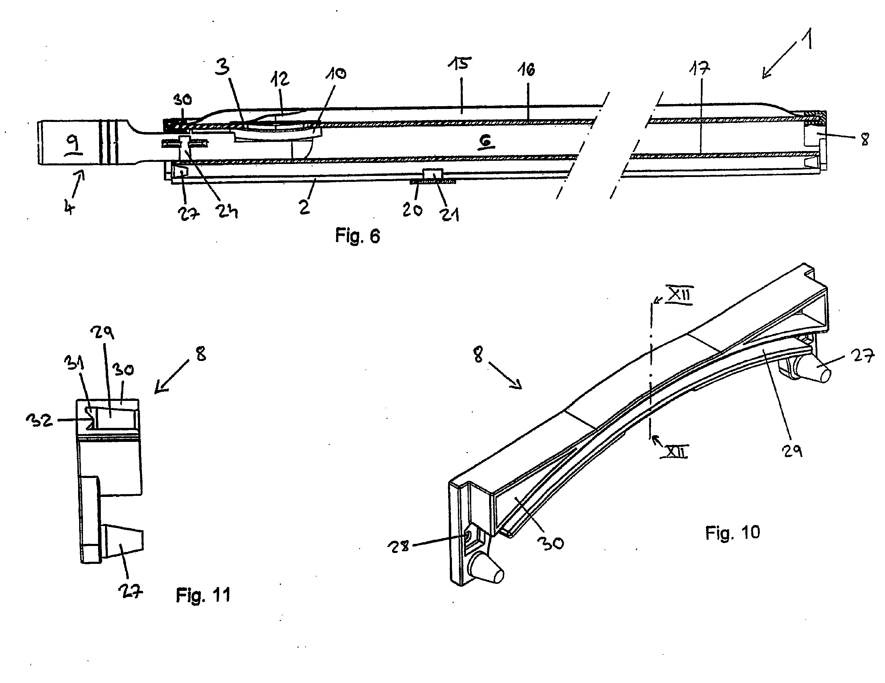

Die Vorrichtung 1 bzw. die Grundplatte 2 ist im Wesentlichen in Draufsicht länglich bzw. rechteckig, wobei eine als Gasverteiler verwendete elastische, perforierte Membran 5 (z.B. Fig. 2) aus Polymermaterial an den Längsseiten 6 und an den Stirnseiten 7 der Grundplatte 2 lösbar gehalten ist. An den Stirnseiten 7 der Grundplatte 2 ist jeweils ein Abschlussteil 8 lösbar mit der Grundplatte 2 verbunden, wie in den Fig. 10 bis 12 näher gezeigt ist.

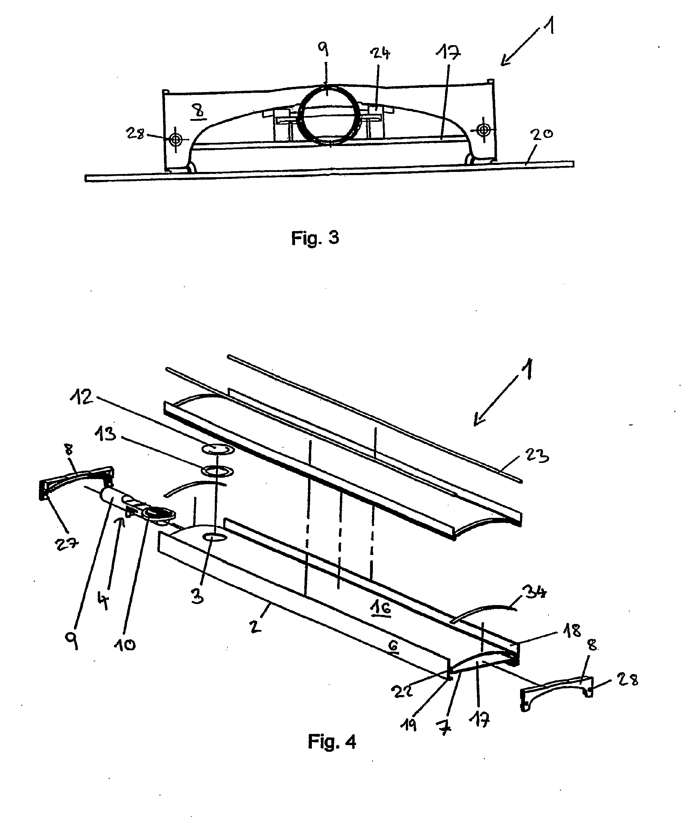

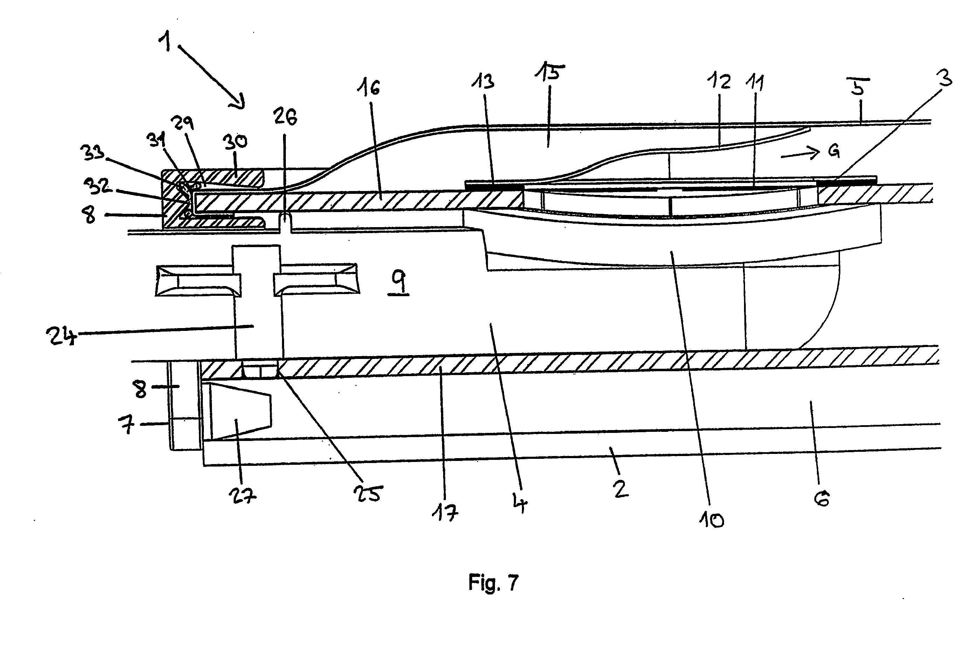

Die Gaszufuhreinrichtung 4 (siehe insbesondere Fig. 6, 7 und 13) ist an einer Stirnseite an der Unterseite der Grundplatte 2 angeordnet und weist einen rohrförmigen, über eine der Stirnseiten 7 der Grundplatte 2 hinaus geführten Gaszufuhrkanal 9 auf. Der rohrförmige Gaszufuhrkanal 9 mündet in einen Grundplatten-Anschlussteil 10, der tellerförmig ausgebildet ist und einen abgesetzten Rand aufweist, so dass er in einem Passsitz in der Gaszufuhröffnung 3 der Grundplatte 2 lösbar gehalten werden kann (s. Fig. 6 und 7). Oberseitig hat der Grundplatten-Anschlussteil 10 eine Gitterstruktur 11 für einen optimierten Auslass des Gases sowie als Auflage für ein Ventilelement 12 (s. auch Fig. 4 und 5).

Die ventilartige Verschließbarkeit der Gaszufuhröffnung 3 ist durch dieses aus elastischem Material gebildete Ventilelement 12 realisiert, das direkt an der Oberseite der Grundplatte 2 befestigt ist. Hierfür ist das Ventilelement 12 mit einem über den Rand der Gaszufuhröffnung 3 hinausgehenden ringförmigen Befestigungsbereich ausgebildet, mit welchem es an der Grundplatte 2 fixiert ist. Dabei kann das Ventilelement 12 in einfacher Weise an der Grundplatte 2 mittels eines im Befestigungsbereich aufgebrachten Klebers, z.B. eines Polyurethan-Klebers, angeklebt sein. Bevorzugt wird jedoch ein entsprechend zwecks Dichtheit des Ventilelements 12 stark haftendes doppelseitiges Klebeband 13 verwendet, da ein solches die Anbringung des Ventilelements 12 an der Grundplatte 2 sowie dessen Abnahme vereinfacht.

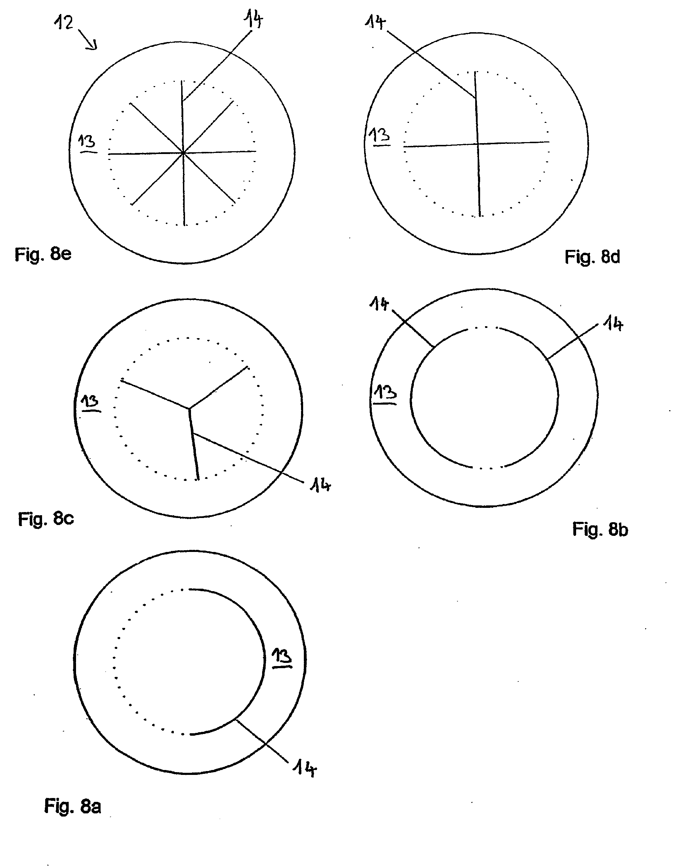

Das Ventilelement 12 weist zumindest einen Schlitz 14 auf, der in den in Fig. 4, 5 und 8a gezeigten Darstellungen kreisbogenförmig ist. Alternativ können andere Schlitzformen vorgesehen sein, die beispielhaft in den Fig. 8b bis 8e schematisch dargestellt sind, nämlich z.B. doppel-bogenförmig (Fig. 8b), sternförmig (Fig. 8e), Y-förmig (Fig. 8c) oder kreuzförmig (Fig. 8d). Selbstverständlich ist es auch möglich, andere Schlitzformen als die dargestellten zu wählen, wie V-förmig, etc. Es hat sich gezeigt, dass sich die Bogenform hinsichtlich des Verhaltens des Ventilelements 12 bezüglich Gasstrom, Strömungsregelung und Abdichtung der Gaszufuhröffnung besonders gut eignet. Im Einzelnen wird das bogenförmige elastische Ventilelement 12 in der Betriebsposition der Vorrichtung 1 durch das aus der Gaszufuhröffnung 3 ausströmende Gas (siehe Pfeil G) derart geöffnet, dass es sich aufgrund seiner im Wesentlichen runden Form gleichmäßig in Strömungsrichtung wölbt und Gas definiert ausströmen lässt. Dadurch kann sich eine gleichmäßige Strömung und ein gleichmäßiger Druck im Zwischenraum 15 zwischen der Grundplatte 2 und der Membran 5 einstellen, die bzw. der die Begasung bzw. Belüftung des Abwassers über die Membran 5 verbessert und effektiver macht.

Auch bei einer Unterbrechung der Gaszufuhr ist das bogenförmige Ventilelement 12 von Vorteil, da es eine einfache Klappen-Wirkung hat, wobei die Elastizität des Ventilelements 12 gegebenenfalls in Verbindung mit einem entsprechender Unterdruck in der Gaszufuhröffnung 3 das Ventilelement 12 an die Gaszufuhröffnung 3 dicht anlegen läßt und letztere somit schützend verschließt. Selbst bei einem Riss der Membran 5 ist die Gaszufuhröffnung 3 sicher und dicht abgedeckt.

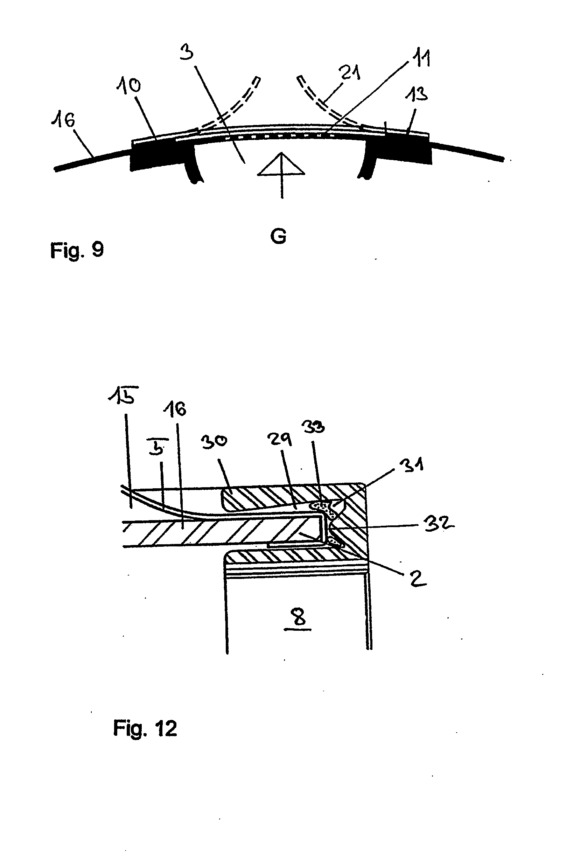

Da das Ventilelement 12, wie erwähnt, auch "strömungslenkend" für das Gas wirken kann, können in Abhängigkeit von der Wahl der Anordnung der Gaszufuhröffnung 3 bzw. des Ventilelements 12 an der Grundplatte 2 verschiedene Schlitzformen im Ventilelement 12 vorgesehen werden (s. Fig. 8a bis 8e). Die Offenstellung eines z.B. mittig oder aber kreuzförmig geschlitzten Ventilelements 12 bei Gaszufuhr ist in der schematischen Schnittdarstellung der Fig. 9 gezeigt.

In Fig. 2 ist die Belüftervorrichtung 1 (ohne Gaszufuhreinrichtung bzw. Gasanschluss) im Querschnitt, und zwar in der Betriebsstellung gezeigt. Hierbei ist die an den Längsseiten 6 der Grundplatte 2. fixierte elastische Membran 5 aufgrund des in den Zwischenraum 15 zwischen Grundplatte 2 und Membran 5 eingebrachten Gases aufgewölbt.

Die Grundplatte 2 kann in an sich bekannter Weise durch einen Strangprofilteil gebildet sein, wobei der Begriff "Grundplatte" hier allgemein zu verstehen ist und jedenfalls nicht auf exakt ebene Gebilde beschränkt ist. So weist im gezeigten Ausführungsbeispiel die Grundplatte 2 einen etwas gewölben Grundplattenkörper 16 auf, unter welchem ein mit ihm einstückiger Steg 17 eine Querverstrebung zwecks Versteifung der Grundplatte 2 vorsieht. An den Längsseiten 6 der Grundplatte 2 sind Wände (obere Seitenteile 18 und untere Seitenteile 19) vorhanden, wobei der Grundplattenkörper 16 auf etwa mittlerer Höhe der Wände bzw. der Seitenteile 18, 19 anschließt. Die unteren Seitenteile 19 sind bodenseitig mit einer Montageplatte 20 mit in Fig. 1 gezeigten Auslegern 21 zur Befestigung der Belüftervorrichtung 1 am Boden eines Klärbeckens verbunden (s. auch Fig. 3).

Im Randbereich des Grundplattenkörpers 16, d.h. im Übergang zu den Seitenteilen 18, 19, sind Längsnuten 22 zum klemmenden Festhalten der elastischen Membran 5 ausgebildet, wobei die Membran 5 durch einen in die Längsnuten 22 passenden Verriegelungskörper 23 festgeklemmt ist. Zum leichteren Einbringen und Entfernen der Membran 5 in die und aus den Längsnuten 22 sind die oberen Seitenteile 18 seitlich auslenkbar. Neben dieser lösbaren Klemmbefestigung kann die Membran 5 ferner mittels eines Klebers in den Längsnuten 22 fixiert sein. Dabei ist es denkbar, auf den Verriegelungskörper 23 einen Kleber - wulstförmig - aufzubringen, der vorteilhafterweise expansionsfähig ist und dadurch den die Membran 5 festklemmenden Verriegelungskörper 23 zusätzlich eingeklemmt und in die Längsnut 22 drückt. Dies kann insbesondere dann gewünscht sein, wenn im Betrieb ein relativ hoher Gasdruck aufgebracht wird, um so einen eventuellen Herausziehen der Randbereiche der Membran 5 entgegenzuwirken.

Wie in den Fig. 3, 4, 6 und 7 sowie 13 veranschaulicht, ist die Gaszufuhreinrichtung 4, insbesondere der rohrförmige Gaszufuhrkanal 9, neben dem Passsitz der Gaszufuhreinrichtung 4 in der Gaszufuhröffnung 3 der Grundplatte 2 zusätzlich an dem zwecks Versteifung der Grundplatte 2 ausgebildeten Steg 17 lösbar eingesetzt und damit an der Grundplatte 2 gehalten (siehe auch Fig. 6 und 7). Im Einzelnen ist der rohrförmige Gaszufuhrkanal 9 Grundplatten-seitig abgeflacht ausgebildet, und er weist seitlich abstehende, daran einstückig angebrachte Füße 24 auf, die in Steckbohrungen 25 (Fig. 7) im Steg 17 der Grundplatte 2 aufgenommen sind. Damit sich diese Steckverbindung nicht einfach lösen kann, ist Gaszufuhrkanal-oberseitig weiters ein Quersteg 26 vorgesehen (s. Fig. 7 und 13), der gegen die Unterseite des Grundplattenkörpers 16 anliegt.

Wie weiters aus den Fig. 6, 10 und 11 ersichtlich, sind die Abschlussteile 8 zur lösbaren Verbindung mit der Grundplatte 2 mit Zapfen 27 versehen, die an den Stirnseiten 7 der Grundplatte 2, z.B. an den unteren Seitenteilen 19 der Grundplatte 2, eingesteckt sind. Falls gewünscht, kann hier ein Kleber für einen besonders festen Halt verwendet werden. Weiters weisen die Abschlussteile 8 Bohrungen 28 auf, die in der angesteckten Position der Abschlussteile 8 an der Grundplatte 2 in Ausrichtung zu den Längsnuten 22 der Grundplatte 2 angeordnet sind. Diese Bohrungen 28 können als "Kleberüberlauf" für einen in die Längsnuten 22 eingebrachten Kleber sowie zur zusätzlichen Klebeverbindung zwischen Abschlussteil 8 und Grundplatte 2 dienen.

Die Abschlussteile 8 der Grundplatte 2 sind im Wesentlichen bogenartig - entsprechend der Querschnittsform der Grundplatte 2 - geformt, vgl. Fig. 10. Die Abschlussteile 8 erfüllen mehrere Funktionen. Sie schließen die Grundplatte 2 ab, und sie dienen dem klemmenden Festhalten der Membran 5 an den Stirnseiten 7 der Grundplatte 2 und damit auch dem Abdecken der Stirnseiten 7 der Grundplatte 2. Die Klemmfunktion ist im Detail in der Schnittdarstellung der Fig. 12 gezeigt (s. auch Fig. 7). Die Membran 5 ist um die (Stirn-)Kante der Grundplatte 2 geschlagen und in einer Klemmnut 29 im Abschlussteil 8 der Grundplatte 2 klemmend gehalten. Der Klemmnutbereich des Abschlussteils 8 weist, im Schnitt gesehen, einen die Klemmnut 29 zur Öffnung hin verengenden oberen Schenkel 30 auf (s. Fig. 12), der an der Oberseite der Membran 5 fest anliegt bzw. andrückt und die Fixierung der Membran 5 auf diese Weise verstärkt.

Die Membran 5 kann in der Klemmnut 29 weiters mit Hilfe eines Klebers zusätzlich befestigt werden. Hierfür kann in den in der Klemmnut 29 vorgesehenen Raum 31, der weiters durch eine Rippe 32 gebildet ist, vor Anbringung des Abschlussteils 8 an die Grundplatte 2 Kleber 33 eingebracht werden. Für einen besonders festen Halt haben sich Polyurethan-Kleber bewährt, da sich mit diesen aufgrund ihrer expandierenden Eigenschaften eine verstärkte Klemmwirkung erzielen läßt.

Für eine einfache Montage der Membran 5 kann ein doppelseitig haftendes Klebeband 34 am oberen stirnseitigen Rand des Grundplattenkörpers 16 aufgebracht werden (s. Fig. 4). Durch diese Befestigung wird auch eine zusätzliche Dichtheit des Grundplatte-Membran-Zwischenraums 15 erzielt.

Bei Ausstattung eines Klärbeckens mit der erfindungsgemäßen Vorrichtung 1 zum Eintragen von Gasbläschen in das Abwasser des Klärbeckens können mehrere Vorrichtungen 1 aneinander gereiht sowie nebeneinander angeordnet sein.

Die Grundplatte 2 kann auch übereinander stapelbar ausgeführt sein, wobei die unteren Seitenteile 19 entsprechende boden- bzw. fußseitige Ausnehmungen aufweisen können, in deren die oberen Seitenteile 18 einer darunter liegenden Grundplatte 2 aufgenommen werden können (siehe Fig. 2).

## Patentansprüche

1. Belüfter-Vorrichtung (1) enthaltend eine Gaszufuhreinrichtung (4) zum Eintragen von Gasbläschen in eine Flüssigkeit mit einer an den Seiten einer Grundplatte (2) lösbar fixierten Membran (5), in welcher Grundplatte (2) eine Gaszufuhröffnung (3) ausgebildet ist, die ein Ventilelement (12) aus elastischem Material aufweist und mit der Gaszufuhreinrichtung (4) verbunden ist , wobei die Gaszufuhreinrichtung (4) zumindest einen rohrförmigen Gaszufuhrkanal (9) auf weist, **dadurch gekennzeichnet, dass** die Gaszufureinrichtung (4) zumindest einen Grundplatten-Anschlussteil (10) mit oberseitiger Gitterstruktur (11) zum Gasauslass sowie als Auflage für das Ventilelement (12) aufweist, wobei der Grundplatten-Anschlussteil (10) im Passsitz lösbar in der Gaszufuhröffnung (3) an der Unterseite der Grundplatte (2) gehalten ist, und dass das Ventilelement (12) zumindest einen Schlitz (14) aufweist und direkt an der oberen Seite der Grundplatte (2) in einem am Rand der Gaszufuhröffnung (3) vorgesehenen ringförmigen Befestigungsbereich befestigt ist, wobei das Ventilelement (12) eine Art Rückschlaventil darstellt, mit Hilfe dessen die Gaszufuhr öffnung (3) bei Unterbrechung der Gas zufuhr sicher verschlossen werden kann.

2. Vorrichtung nach Anspruch 1, **dadurch gekennzeichnet, dass** die Gaszufuhröffnung (3), das Ventilelement (12) und der Grundplatten-Anschlussteil (10) in Draufsicht im Wesentlichen kreisförmig sind.

3. Vorrichtung nach Anspruch 1 oder 2, **dadurch gekennzeichnet, dass** das Ventilelement (12) im Befestigungsbereich am Rand der Gaszufuhröffnung (3) mittels eines Klebers befestigt ist.

4. Vorrichtung nach einem der Ansprüche 1 bis 3, **dadurch gekennzeichnet, dass** der zumindest eine Schlitz (14) in Draufsicht bogenförmig, geradlinig, Y-förmig, kreuzförmig oder sternförmig ausgebildet ist.

5. Vorrichtung nach Anspruch 4 mit Anspruch 2, **dadurch gekennzeichnet, dass** die Krümmung des bogenförmigen Schlitzes (14) in Draufsicht der Krümmung der Kreisform der Gaszufuhröffnung (3) entspricht.

6. Vorrichtung nach einem der Ansprüche 1 bis 5, **dadurch gekennzeichnet, dass** der rohrförmige Gaszufuhrkanal (9) in den Grundplatten-Anschlussteil (10) mündet, welcher für den Passsitz in der Gaszufuhröffnung (3) tellerförmig ausgebildet ist und einen abgesetzten Rand aufweist.

7. Vorrichtung nach einem der Ansprüche 1 bis 6, **dadurch gekennzeichnet, dass** die Grundplatte (2) in Draufsicht eine rechteckige Form mit zwei Längsseiten (6) und zwei Stirnseiten (7) aufweist, und die Membran (5) randseitig entlang der Längsseiten (6) lösbar gehalten ist, und vorzugsweise die Gaszufuhröffnung (3) mit dem Ventilelement (12) nahe einer der Stirnseiten (7) der Grundplatte (2) im Bereich der Mitte zwischen den Längsseiten (6) der Grundplatte (2) angeordnet ist.

8. Vorrichtung nach Anspruch 7 mit Anspruch 4, **dadurch gekennzeichnet, dass** die konkave Seite des bogenförmigen Schlitzes (14) des Ventilelements (12) zu der der Gaszufuhröffnung (3) gegenüberliegenden Stirnseite (7) der Grundplatte (2) gerichtet ist.

9. Vorrichtung nach einem der Ansprüche 7 bis 8, **dadurch gekennzeichnet, dass** an den Stirnseiten (7) der Grundplatte (2) Abschlussteile (8) lösbar angebracht sind, die über zumindest eine Steckverbindung (27) mit der Grundplatte (2) verbunden sind.

10. Vorrichtung nach einem der Ansprüche 1 bis 9, **dadurch gekennzeichnet, dass** das elastische Material des Ventilelements (12) dem Material der Membran (5) entspricht.

11. Vorrichtung nach einem der Ansprüche 1 bis 10, **dadurch gekennzeichnet, dass** die Grundplatte (2) randseitig Längsnuten (22) zum klemmenden Festhalten der perforierten Membran (5) aufweist, wobei ein in die jeweilige Längsnut (22) passender Verriegelungskörper (23) vorgesehen ist.

12. Vorrichtung nach Anspruch 11 mit Anspruch 7, **dadurch gekennzeichnet, dass** an den Längsseiten (6) der Grundplatte (2) Seitenteile (18, 19) vorgesehen sind, wobei obere Seitenteile (18) die Fortsetzung der Außenwände der Längsnuten (22) bilden und für das Einbringen und Entfernen des Verriegelungskörpers (23) in die und aus den Längsnuten (22) seitlich auslenkbar sind.

13. Vorrichtung nach einem der Ansprüche 9 bis 12, **dadurch gekennzeichnet, dass** die Abschlussteile (8) Klemmnuten (29) zum Halten der Membran (5) an der Grundplatte (2) aufweisen, wobei vorzugsweise die Klemmnuten (29) eine Rippe (32) aufweisen.

14. Vorrichtung nach Anspruch 13 mit Anspruch 7, **dadurch gekennzeichnet, dass** die Membran (5) an den Längsseiten (6) und/oder Stirnseiten (7) der Grundplatte (2) zusätzlich angeklebt ist, wobei ein Kleber (33), vorzugsweise ein Polyurethan-Kleber, in die Längsnuten (22) der Grundplatte (2) bzw. gegebenenfalls in die Klemmnuten (29) der Abschlussteile (8) eingebracht ist.

15. Vorrichtung nach einem der Ansprüche 1 bis 14, **dadurch gekennzeichnet, dass** die Grundplatte (2) gewölbt und einteilig mit einem Versteifungs-Steg (17), z.B. als Strangpressteil, ausgebildet ist.

## Claims

1. An aeration device (1) comprising gas supply means (4) for introducing gas bubbles into a liquid, comprising a membrane (5) detachably fixed at the sides of a base plate (2), wherein a gas supply vent (3) comprising a valve member (12) of a resilient material is formed in the base plate (2) and is connected to the gas supply means (4), wherein the gas supply means (4) comprises at least one tubular gas supply channel (9), **characterized in that** the gas supply means (4) comprises at least one base plate connection part (10) having an upper face grid structure (11) for the discharge of gas and as a rest for the valve member (12), wherein the base plate connection part (10) fits detachably in the gas supply vent (3) at the bottom of the base plate (2), and that the valve member (12) comprises at least one slot (14) and is fixed directly to the upper side of the base plate (2) in an annular fixing region provided at the edge of the gas supply vent (3), wherein the valve member (12) constitutes a kind of check valve by means of which the gas supply vent (3) is adapted to be closed safely on interruption of the gas supply.

2. The device according to claim 1, **characterised in that** the gas supply vent (3), the valve member (12) and the base plate connection part (10) are substantially circular in plan view.

3. The device according to claims 1 or 2, **characterised in that** the valve member (12) is fixed in the fixing region at the edge of the gas supply vent (3) by means of an adhesive.

4. The device according to any one of claims 1 to 3, **characterised in that** the at least one slot (14) is arc-shaped, linear, Y-shaped, cross-shaped or star-shaped in plan view.

5. The device according to claim 4 with claim 2, **characterised in that** the curvature of the arc-shaped slot (14) corresponds to the curvature of the circular shape of the gas supply vent (3) in plan view.

6. The device according to any one of claims 1 to 5, **characterised in that** the tubular gas supply channel (9) opens into the base plate connection part (10) that is of saucer-shaped design for fitting in the gas supply vent and comprises a shouldered edge.

7. The device according to any one of claims 1 to 6, **characterised in that** the base plate (2) has a rectangular shape in plan view with two longitudinal sides (6) and two end faces (7), and the membrane (5) is detachably held at the edge along the longitudinal sides (6), and preferably the gas supply vent (3) is arranged along with the valve member (12) close to one of the end faces (7) of the base plate (2) in the middle region between the longitudinal sides (6) of the base plate (2).

8. The device according to claim 7 with claim 4, **characterised in that** the concave side of the arc-shaped slot (14) of the valve member (12) faces the end face (7) of the base plate (2) positioned opposite to the gas supply vent (3).

9. The device according to any one of claims 7 to 8, **characterised in that** end parts (8) are detachably mounted at the end faces (7) of the base plate (2), and are connected to the base plate (2) via at least one plug-in connection (27).

10. The device according to any one of claims 1 to 9, **characterised in that** the resilient material of the valve member (12) corresponds to the material of the membrane (5).

11. The device according to any one of claims 1 to 10, **characterised in that** the base plate (2) comprises longitudinal grooves (22) at the edges, for clampingly fixing the perforated membrane (5), a locking member (23) being provided that fits in the respective longitudinal groove (22).

12. The device according to claim 11 with claim 7, **characterised in that** side members (18, 19) are provided at the longitudinal sides (6) of the base plate (2), wherein upper side members (18) form the continuation of the outer walls of the longitudinal grooves (22) and are adapted to be deflected laterally for inserting and removing the locking member (23) in and from the longitudinal grooves (22).

13. The device according to any one of claims 9 to 12, **characterised in that** the end parts (8) comprise clamping grooves (29) for retaining the membrane (5) at the base plate (2), wherein the clamping grooves (29) preferably comprise a rib (32).

14. The device according to claim 13 with claim 7, **characterised in that** the membrane (5) is additionally adhered to the longitudinal sides (6) and/or to the end faces (7) of the base plate (2), an adhesive (33), preferably a polyurethane adhesive, being inserted in the longitudinal grooves (22) of the base plate (2) or, optionally, in the clamping grooves (29) of the end parts (8).

15. The device according to any one of claims 1 to 14, **characterised in that** the base plate (2) is cambered and is configured integrally with a stiffening web (17), for example, as an extruded part.

## Revendications

1. Système d'aérage (1) comprenant un dispositif d'amenée de gaz (4) permettant de former des bulles de gaz dans un liquide, avec une membrane (5) fixée de manière amovible sur les côtés d'une plaque de base (2), une ouverture d'arrivée de gaz (3) étant réalisée dans ladite plaque de base (2), laquelle comporte un élément de soupape (12) en matériau élastique, et est reliée au dispositif d'amenée de gaz (4), ledit dispositif d'amenée de gaz (4) comportant au moins un canal d'amenée de gaz (9) tubulaire, **caractérisé en ce que** le dispositif d'amenée de gaz (4) présente au moins une partie de raccord (10) de plaque de base avec une structure supérieure à grille (11), pour la purge de gaz et en tant que substrat pour l'élément de soupape (12), la partie de raccord (10) de plaque de base étant maintenue en ajustement serré et de manière amovible dans l'ouverture d'arrivée de gaz (3) sur la face inférieure de la plaque de base (2), et **en ce que** l'élément de soupape (12) comporte au moins une fente (14) et est directement fixé contre la face supérieure de la plaque de base (2) dans une zone de fixation annulaire prévue sur le bord de l'ouverture d'arrivée de gaz (3), l'élément de soupape (12) formant un genre de soupape anti-retour, au moyen de laquelle l'ouverture d'arrivée de gaz (3) peut être fermée de manière sûre en cas d'interruption de l'amenée de gaz.

2. Système selon la revendication 1, **caractérisé en ce que**, vus en élévation, l'ouverture d'arrivée de gaz (3), l'élément de soupape (12) et la partie de raccord (10) de la plaque de base sont sensiblement circulaires.

3. Système selon la revendication 1 ou 2, **caractérisé en ce que** l'élément de soupape (12) est fixé au moyen d'un adhésif dans la zone de fixation sur le bord de l'ouverture d'arrivée de gaz (3).

4. Système selon l'une des revendications 1 à 3, **caractérisé en ce que** la ou les fentes (14) vues en élévation sont arquées, rectilignes, en forme de Y, de croix ou d'étoile.

5. Système selon la revendication 4 et la revendication 2, **caractérisé en ce que** la courbure de la fente (14) arquée vue en élévation correspond à la courbure de la forme circulaire de l'ouverture d'arrivée de gaz (3).

6. Système selon l'une des revendication 1 à 5, **caractérisé en ce que** le canal tubulaire d'amenée de gaz (9) débouche dans la partie de raccord (10) de plaque de base, laquelle est réalisée en forme de plateau pour l'ajustement serré dans l'ouverture d'arrivée de gaz (3) et présente un bord étagé.

7. Système selon l'une des revendications 1 à 6, **caractérisé en ce que** la plaque de base (2) vue en élévation présente une forme rectangulaire avec deux longueurs (6) et deux largeurs (7), **en ce que** la membrane (5) est maintenue par le bord de manière amovible le long des longueurs (6), et **en ce que** l'ouverture d'arrivée de gaz (3) est préférentiellement disposée avec l'élément de soupape (12) à proximité d'une des largeurs (7) de la plaque de base (2), dans la zone du milieu entre les longueurs (6) de la plaque de base (2).

8. Système selon la revendication 7 et la revendication 4, **caractérisé en ce que** le côté concave de la fente (14) arquée de l'élément de soupape (12) est dirigé vers la largeur (7) de la plaque de base (2) qui est opposée à l'ouverture d'arrivée de gaz (3).

9. Système selon la revendication 7 ou 8, **caractérisé en ce que** des pièces terminales (8) sont appliquées de manière amovible sur les largeurs (7) de la plaque de base (2), lesquelles sont raccordées à la plaque de base (2) par au moins une connexion à fiche (27).

10. Système selon l'une des revendications 1 à 9, **caractérisé en ce que** le matériau élastique de l'élément de soupape (12) correspond au matériau de la membrane (5).

11. Système selon l'une des revendications 1 à 10, **caractérisé en ce que** la plaque de base (2) présente sur le bord des rainures longitudinales (22) pour le maintien par serrage de la membrane (5) perforée, un corps de verrouillage (23) ajusté dans chaque rainure longitudinale (22) étant prévu.

12. Système selon la revendication 11 et la revendication 7, **caractérisé en ce que** des pièces latérales (18, 19) sont prévues sur les longueurs (6) de la plaque de base (2), des pièces latérales supérieures (18) formant le prolongement des parois extérieures des rainures longitudinales (22) et étant déviables latéralement pour la mise en place et le retrait du corps de verrouillage (23) dans les rainures longitudinales (22) et hors de celles-ci.

13. Système selon l'une des revendications 9 à 12, **caractérisé en ce que** les pièces terminales (8) comportent des rainures de serrage (29) pour le maintien de la membrane (5) contre la plaque de base (2), les rainures de serrage (29) comportant préférentiellement une nervure (32).

14. Système selon la revendication 13 et la revendication 7, **caractérisé en ce que** la membrane (5) est en outre collée sur les longueurs (6) et/ou les largeurs (7) de la plaque de base (2), un adhésif (33), de préférence une colle polyuréthane, étant appliqué dans les rainures longitudinales (22) de la plaque de base (2) ou, le cas échéant, dans les rainures de serrage (29) des pièces terminales (8).

15. Système selon l'une des revendications 1 à 14, **caractérisé en ce que** la plaque de base (2) est bombée et est réalisée d'une seule pièce avec une traverse de renforcement (17), notamment en tant que pièce filée à la presse.
